# EUROPEAN PATENT SPECIFICATION

(11) **EP 1 510 326 B1**
(45) Date of publication and mention of the grant of the patent: **30.07.2008**
(21) Application number: 04255085.5
(22) Date of filing: 24.08.2004
(51) Int. Cl.: B29C 55/22, B29C 61/08, B29C 71/00, F16L 9/12

(54) **Method for forming a tubular member made of fluororesin having low gas permeability**
Verfahren zur Herstellung eines Rohrteils aus Fluorharz mit niedriger Gas-Permeabilität
Procédé pour former un élément tubulaire en résine fluorée à faible perméabilité au gaz

(30) Priority: 26.08.2003 JP 2003301450
(43) Date of publication of application: 02.03.2005
(73) Proprietor: Junkosha, Inc., Kasama-shi Ibaraki Prefecture (JP)
(72) Inventor: Hayashi, Yukihiko, Kasama-shi Ibaraki Prefecture (JP); Suzuki, Masahiro, Kasama-shi Ibaraki Prefecture (JP)
(74) Representative: Shanks, Andrew

(56) References cited:
- EP-A- 0 487 749
- US-A- 3 417 176
- US-A- 4 104 394
- US-A- 4 348 345
- US-A- 4 743 480
- US-A- 4 830 062
- US-A- 5 833 070
- US-A- 5 980 799
- US-A- 6 025 044
- US-B1- 6 203 735

## Description

### FIELD OF THE INVENTION

The present invention relates to a method of forming a fluororesin tubular member, and to a fluororesin tubular member having exceptional gas-barrier properties with minimal gas permeability.

### BACKGROUND OF THE INVENTION

Materials made of fluororesins are extensively used in applications ranging from semiconductor manufacturing processes to those wherein chemical resistance is required. For example, hoses, tubes, and other tubular members manufactured from fluororesin materials by means of extrusion molding are employed in pipework used for fluids.

However, tubular members made of fluororesins have the characteristic of being highly gas-permeable, so that films and tubes made from tetrafluoroethylene-fluoroalkyl vinyl ether copolymer (PFA), tetrafluoroethylene-hexafluoropropylene copolymer (FEP), and polytetrafluoroethylene (PTFE), which are extensively used fluororesins, may be employed as gas-permeable membranes used in sensors for detecting oxygen and other gases in water; and the tubes may be used for such purposes as removing dissolved gases contained in fluids used in semiconductor manufacturing processes.

On the other hand, problems are encountered when hoses, tubes, or the like made from fluororesins are used to convey pure water or other fluids in applications ranging from semiconductor manufacturing processes to those wherein chemical resistance is demanded; i.e., when gases dissolved in fluids, or vapors from these fluids leak from such tubes or the like, and these leaked gases may condense on the surfaces of the tubes or the like, causing the area surrounding the tube to get wet from the liquid.

It accordingly becomes necessary to wipe the liquids from the piping surfaces, replace the tubes, or perform other such activities on a frequent basis in semiconductor manufacturing processes.

In order to prevent or inhibit gas from permeating members made from synthetic resins, methods are performed that typically involve fashioning multilayered tubes using members that exhibit low gas permeability; vapour-depositing a metal, ceramic, or other material; plating a metal; or admixing a filler therewith.

US-A-4,830,062 relates to porous heat-shrinkable tetrafluoroethylene polymer tubes and processes for producing said tubes.

US-A-6,203,735 relates to a method of making, expanded polytetrafluoroethylene products by manipulating an expanded polytetrafluoroethylene tubular body into a desired three-dimensional confirmation.

US-A-3,417,176 relates to a process of forming heat-shrinkable perfluorocarbon polymer tubing and shapes by flattening unstretched perfluorocarbon polymer tubing under pressure to form a stretched tape which is essentially planar and rectangular in cross-section. A highly porous structure is formed.

US-A-6,025,044 relates to thin-wall polytetrafluoroethylene tubes wherein the porous polytetrafluorethylene film has a microstructure containing a multiplicity of fibrils oriented substantially parallel to each other.

EP-A-0487749 relates to a moulded article of a crystalline thermoplastic resin with high gas barrier properties, produced while optimising the crystal orientation of the resin to give a product with a specified monoaxial monoplanar orientation.

However, tubes made of fluororesins are employed in applications requiring chemical resistance, or requiring the pollution caused as a result of substances eluting from the tube to be prevented, which renders impossible the use of countermeasures such as establishing a multilayered structure or adding other substances to the fluororesin composition in order to lower the gas permeability.

### SUMMARY

According to a first aspect of the present invention there is provided a method of forming a fluororesin tubular member comprising the following steps:
(a) axially stretching a fluororesin tubular body in a heated state at a temperature that is at or below the moulding temperature; and
(b) annealing and heat-setting the axially stretched fluororesin tubular body at a temperature that is at or below the moulding temperature
wherein the gas permeability of the fluororesin tubular body is thereby reduced.

According to a second aspect of the present invention there is provided a fluoresin tubular member formed according to claim 6.

It is an object of the present invention to use a hose, tube, or other fluororesin tubular member to prevent gases from leaking, and the leaked vapour from condensing on the tube surface, by means of reducing the gas permeability without compromising the chemical resistance and other exceptional characteristics inherent in the fluororesin.

The problems of the present invention are resolved with a fluororesin tubular member obtained by means of heat-setting a tubular body formed from a fluororesin following stretching in the axial direction.

The fluororesin tubular member is annealed and heat-set at a temperature that is at or below the molding temperature after being stretched in a heated state at a temperature that is at or below the molding temperature.

The fluororesin tubular member is stretched to a length that is two to ten times as great as its pre-stretched length.

The fluororesin in the fluororesin tubular member is at least one compound selected from among polytetrafluoroethylene (PTFE), tetrafluoroethylene-hexafluoropropylene copolymer (FEP), tetrafluoroethylene-fluoroalkyl vinyl ether copolymer (PFA), ethylene-tetrafluoroethylene copolymer (ETFE), polyvinylidene fluoride (PVDF), polychlorofluoroethylene (PCTFE), and tetrafluoroethylene-hexafluoropropylene-vinylidene fluoride ternary copolymer (THV).

The fluororesin in the fluororesin tubular member comprises a thermoplastic resin, and is formed after having been melted.

The fluororesin tubular member of the present invention is stretched and heat set after molding, making it possible to obtain a product in which the gas permeability is reduced and the chemical resistance or other characteristics remain unaffected in comparison with those of the pre-stretched fluororesin tubular member. It is accordingly possible to provide a fluororesin tube in which gas leakage and condensation on the tube surface is reduced when the tube is used for supplying chemicals in semiconductor manufacturing processes or the like.

### BRIEF DESCRIPTION OF THE DRAWINGS

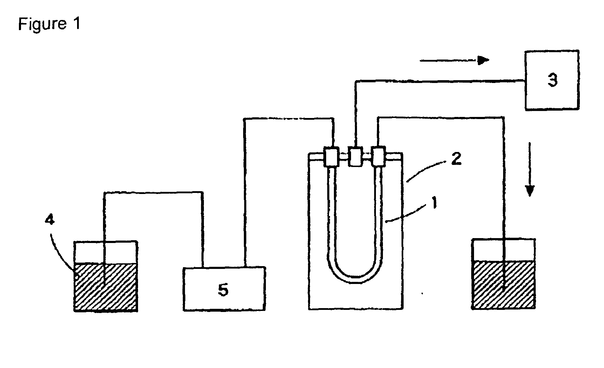

Figure 1 is a diagram used to illustrate the method for evaluating the gas permeability of the sample and comparative tubes of the present invention.

### DESCRIPTION OF THE INVENTION

In the present invention, it was discovered that stretching the fluororesin tube in the axial direction after molding enables the gas permeability to be reduced without the composition or other attributes of the fluororesin tube being altered.

It is unclear as to why the gas permeability of the fluororesin tube of the present invention is lower than that of the unstretched tube, but it is presumed that the molecules of the fluororesin become oriented in the axial direction and arranged tightly along the tube wall as a result of stretching being performed after molding.

The fluororesin that can be used in tubes made from the fluororesin in the present invention may be used in a wide variety of applications, provided that the fluororesin material may be molded into a tubular shape by means of extrusion molding or another technique.

Specific examples of the fluororesin include at least one compound selected from among polytetrafluoroethylene (PTFE), tetrafluoroethylene-hexafluoropropylene copolymer (FEP), tetrafluoroethylene-fluoroalkyl vinyl ether copolymer (PFA), ethylene-tetrafluoroethylene copolymer (ETFE), polyvinylidene fluoride (PVDF), polychlorofluoroethylene (PCTFE), and tetrafluoroethylene-hexafluoropropylene-vinylidene fluoride ternary copolymer (THV).

Tetrafluoroethylene-hexafluoropropylene copolymer (FEP), tetrafluoroethylene-fluoroalkyl vinyl ether copolymer (PFA), ethylene-tetrafluoroethylene copolymer (ETFE), and tetrafluoroethylene-hexafluoropropylene-vinylidene fluoride ternary copolymer (THV) are preferably used among the above compounds.

With thermoplastic fluororesins in particular, members of any desired shape may be extrusion-molded or otherwise formed once the fluororesin has been heated and melted.

The stretching of the fluororesin tubular member is performed after the tubular member has been extrusion-molded or otherwise formed, at a temperature that is at or below the temperature used during molding. After stretching, the member is preferably subjected to an annealing treatment at a temperature that is at or below the stretching temperature, and heat set.

The draw ratio of the fluororesin tube is preferably two to ten times as great as the length of the pre-stretched fluororesin tube.

It is not desirable for the draw ratio to be less than two times, since only a minimal effect will be achieved with regard to reducing the gas permeability; nor is it desirable for the ratio to be greater than ten, since the article will whiten, deteriorate in strength, or be otherwise adversely affected.

The stretching is preferably performed at a temperature that is at or below the molding temperature, at or above the glass transition point, and at or below the melting point.

If stretching is performed below the glass transition point, strain will increase and dimensional stability will be unobtainable. On the other hand, if stretching is performed above the melting point, rupturing will readily occur and an adequate draw ratio will be unobtainable.

The fluororesin tubular member of the present invention exhibits improved transparency after stretching, and, when used as a tube for conveying fluids, enables the state of the fluids within the tube to be confirmed in a straightforward manner. Furthermore, the stretching also improves the smoothness of the surface, which produces the effect of improving the flowability of fluids therein. The coefficient of linear expansion is reduced in the stretching direction, and both the dimensional stability and tensile strength are improved.

The present invention shall be described below with reference to inventive and comparative examples

### Inventive Example 1

A tube having an inside diameter of 13.4 mm and an outside diameter of 17.9 mm was fabricated as a result of passing tetrafluoroethylene-fluoroalkyl vinyl ether copolymer (PFA451 HP-J; manufactured by Du Pont-Mitsui Fluorochemicals Co., Ltd.) from a single-screw extruder having a die temperature of 380°C through a former.

The tube was subsequently stretched 600% at a temperature of 280°C, a travelling speed of 0.17 m/min, and a pulling speed of 1.0 m/min, whereupon an annealing treatment was performed at a temperature of 220°C, a travelling speed of 0.60 m/min, and a pulling speed of 0.50 mm/min, and a 20% shrinkage treatment was performed.

### Test Method

As shown in FIG. 1, the flow rate of a metering pump 5 was varied to feed oxygen-saturated purified water 4 at a temperature of 25°C to a 1080 mm sample tube 1, which was attached to a decompression vessel 2. The oxygen concentration was 8.1 ppm. In this configuration, the decompression vessel 2 was decompressed to 5.3 kPa with a vacuum pump 3, and the amount of dissolved oxygen in the purified water that had passed through the sample tube was measured using a dissolved-oxygen-concentration measuring device. The difference between this value and the concentration of dissolved oxygen in the purified water that had not passed through the sample tube was used to determine the gas permeability of the sample tube. The results for a sample tube prepared in accordance with Inventive Example 1 are displayed in Table 1.

### Comparative Example 1

Comparative Example 1 having an inside diameter of 6.0 mm, an outside diameter of 8.0 mm, and a wall thickness of 1.0 mm was fabricated as a result of passing tetrafluoroethylene-fluoroalkyl vinyl ether copolymer (PFA 451 HP-J; manufactured by Du Pont-Mitsui Fluorochemicals Co., Ltd.) from a single-screw extruder having a die temperature of 380°C through a former.

The sample tube used in Inventive Example 1 was replaced with Comparative Example 1 (length: 1140 mm), and the gas permeability of Comparative Example 1 was measured under the same evaluating conditions used in Inventive Example 1. The results for Comparative Example 1 are displayed in Table 1.

**Table 1**

| | Volumetric Flow | Inside Surface Area | Flow Rate | Surface Area of Membrane | Amount of Dissolved Oxygen | Gas Permeability |
|---|---|---|---|---|---|---|
| | mL/min | cm² | cm/s | cm² | ppm | g/min/cm² |
| Inventive Example 1 | 10 | 0.30 | 0.55 | 210.25 | 7.82 | 0.1332 |
| | 18 | 0.30 | 0.99 | 210.25 | 7.86 | 0.2055 |
| | 30 | 0.30 | 1.66 | 210.25 | 7.91 | 0.2711 |
| Comparative Example 1 | 10 | 0.28 | 0.59 | 214.78 | 7.10 | 0.4656 |
| | 18 | 0.28 | 1.06 | 214.78 | 7.20 | 0.7543 |
| | 30 | 0.28 | 1.77 | 214.78 | 7.44 | 0.9219 |

### Inventive Example 2

A tube having an inside diameter of 12.2 mm and an outside diameter of 16.3 mm was fabricated as a result of passing tetrafluoroethylene-hexafluoropropylene copolymer (FEP NP-20; manufactured by Daikin Industries Ltd.) from a single-screw extruder having a die temperature of 380°C through a former.

The tube was subsequently stretched 500% at a temperature of 230°C, a travelling speed of 0.20 m/min, and a pulling speed of 1.0 m/min, whereupon an annealing treatment was performed at a temperature of 180°C, a travelling speed of 0.60 m/min, and a pulling speed of 0.50 mm/min, and a 20% shrinkage treatment was performed.

The gas permeability of Inventive Example 2 (length: 1090 mm) was measured in the same manner as in Inventive Example 1. The results for Inventive Example 2 are displayed in Table 2.

### Comparative Example 2

A tube having an inside diameter of 6.0 mm and an outside diameter of 8.0 mm was fabricated as a result of passing tetrafluoroethylene-hexafluoropropylene copolymer (FEP NP-20; manufactured by Daikin Industries Ltd.) from a single-screw extruder having a die temperature of 380°C through a former.

The gas permeability of Comparative Example 2 (length: 1160 mm), was measured under the same evaluating conditions used in Inventive Example 1. The results for Comparative Example 2 are displayed in Table 2.

**Table 2**

| | Volumetric Flow | Inside Surface Area | Flow Rate | Surface Area of Membrane | Amount of Dissolved Oxygen | Gas Permeability |
|---|---|---|---|---|---|---|
| | mL/min | cm² | cm/s | cm² | Ppm | g/min/cm² |
| Inventive Example 2 | 9 | 0.30 | 0.50 | 225.83 | 7.74 | 0.1435 |
| | 13 | 0.30 | 0.72 | 225.83 | 7.80 | 0.1727 |
| | 18 | 0.30 | 0.99 | 225.83 | 7.88 | 0.1754 |
| Comparative Example 2 | 9 | 0.28 | 0.53 | 205.36 | 7.44 | 0.2893 |
| | 13 | 0.28 | 0.77 | 205.36 | 7.51 | 0.3735 |
| | 18 | 0.28 | 1.06 | 205.36 | 7.60 | 0.4383 |

### Inventive Example 3

A tube having an inside diameter of 13.4 mm and an outside diameter of 17.9 mm was fabricated as a result of passing tetrafluoroethylene-fluoroalkyl vinyl ether copolymer (950HP-plus; manufactured by Du Pont-Mitsui Fluorochemicals Co., Ltd.) from a single-screw extruder having a die temperature of 380°C through a former.

The tube was subsequently stretched 600% at a temperature of 280°C, a travelling speed of 0.15 m/min, and a pulling speed of 0.9 m/min, whereupon an annealing treatment was performed at a temperature of 200°C, a travelling speed of 0.60 m/min, and a pulling speed of 0.50 mm/min, and a 20% shrinkage treatment was performed.

The gas permeability of Inventive Example 3 (length: 1100 mm) was measured in the same manner as in Inventive Example 1. The results for Inventive Example 3 are displayed in Table 3.

### Comparative Example 3

A tube having an inside diameter of 6.0 mm and an outside diameter of 8.0 mm was fabricated as a result of passing tetrafluoroethylene-fluoroalkyl vinyl ether copolymer (950HP-plus; manufactured by Du Pont-Mitsui Fluorochemicals Co., Ltd.) from a single-screw extruder having a die temperature of 380°C through a former.

The gas permeability of Comparative Example 3 (length: 1080 mm) was measured under the same evaluating conditions used in Inventive Example 1. The results for Comparative Example 3 are displayed in Table 3.

**Table 3**

| | Volumetric Flow | Inside Surface Area | Flow Rate | Surface Area of Membrane | Amount of Dissolved Oxygen | Gas Permeability |
|---|---|---|---|---|---|---|
| | mL/min | cm² | cm/s | cm² | ppm | g/min/cm² |
| Inventive Example 3 | 10 | 0.30 | 0.55 | 214.15 | 7.60 | 0.2335 |
| | 17 | 0.30 | 0.94 | 214.15 | 7.74 | 0.2858 |
| | 30 | 0.30 | 1.66 | 214.15 | 7.88 | 0.3082 |
| Comparative Example 3 | 10 | 0.28 | 0.59 | 203.47 | 7.03 | 0.5259 |
| | 17 | 0.28 | 1.00 | 203.47 | 7.08 | 0.8522 |
| | 30 | 0.28 | 1.77 | 203.47 | 7.50 | 0.8846 |

## Claims

1. A method of forming a fluororesin tubular member comprising the following steps:
(a) axially stretching a fluororesin tubular body in a heated state at a temperature that is at or below the moulding temperature; and
(b) annealing and heat-setting the axially stretched fluororesin tubular body at a temperature that is at or below the moulding temperature,
wherein the gas permeability of the fluororesin tubular body is thereby reduced.

2. A method of forming a fluororesin tubular member according to claim 1, wherein the fluororesin tubular member is axially stretched to a length that is two to ten times the pre-stretched length of the fluororesin tubular member.

3. A method of forming a fluororesin tubular member according to claim 1, wherein the fluororesin tubular member is formed from tetrafluoroethylene-fluoroalkyl vinyl ether copolymer which is initially stetched 600% at a temperature of 280°C at a travelling speed of 0.17 m/min with a pulling speed of 1.0 m/min whereupon an annealing treatment was performed at a temperature of 220°C at a travelling speed of 0.60 m/min with a pulling speed of 0.50 mm/min and a 20% shrinkage treatment was performed.

4. A method of forming a fluororesin tubular member according to claim 1, wherein the fluororesin tubular member is a tetrafluoroethylene-hexafluoropropylene copolymer which is stretched 500% at a temperature of 230°C at a travelling speed of 0.20 m/min with a pulling speed of 1.0 m/min whereupon an annealing treatment was performed at a temperature of 180°C at a travelling speed of 0.60 m/min and a pulling speed of 0.50 mm/min and a 20% shrinkage treatment was performed.

5. A method of forming a fluororesin tubular member according to claim 1, wherein the fluororesin tubular member is a tetrafluoroethylene-fluoroalkyl vinyl ether copolymer which is stretched 600% at a temperature of 280°C at a travelling speed of 0.15 m/min with a pulling speed of 0.9 m/min whereupon an annealing treatment was performed at a temperature of 200°C at a travelling speed of 0.60 m/min with a pulling speed of 0.50 mm/min and a 20% shrinkage treatment was performed.

6. A fluororesin tubular member obtainable according to any of claims 3 to 5.

7. A fluororesin tubular member according to claim 6, wherein the fluororesin in the fluororesin tubular member is at least one compound selected from the following: polytetrafluoroethylene (PTFE); tetrafluoroethylene-hexafluoropropylene copolymer (FEP); tetrafluoroethyelene-fluoroalkyl vinyl ether copolymer (PFA); ethylene-tetrafluoroethylene copolymer (ETFE); polyvinylidene fluoride (PVDF); polychlorofluoroethylene (PCTFE); and tetrafluoroethylene-hexafluoropropylene-vinylidene fluoride ternary copolymer (THV).

8. A fluororesin tubular member according to any of claims 6 or 7, wherein the fluororesin in the fluororesin tubular member comprises a thermoplastic resin.

9. Use of a fluororesin tubular member according to any of claims 6 to 8 in the supply of liquids in semiconductor manufacturing processes.

## Patentansprüche

1. Verfahren zum Formen eines Fluorharz-Rohrteils, umfassend die Schritte:
(a) axiales Strecken eines Fluorharz-Hohlkörpers in einem erhitzten Zustand bei einer Temperatur, die sich bei oder unterhalb der Formpresstemperatur befindet, und
(b) Tempern und Thermofixieren des axial verstreckten Fluorharz-Hohlkörpers bei einer Temperatur, die sich bei oder unterhalb der Formpresstemperatur befindet;
wobei **dadurch** die Gasdurchlässigkeit des Fluorharz-Hohlkörpers herabgesetzt wird,

2. Verfahren zum Formen eines Fluorharz-Rohrteils nach Anspruch 1, wobei das Fluorhatz-Rohrteil axial auf eine Länge verstreckt wird, die das Zwei- bis Zehnfache der Länge vor dem Strecken des Fluorharz-Rohrteils beträgt.

3. Verfahren zum Formen eines Fluorharz-Rohrteils nach Anspruch 1, wobei das Fluorharz-Rohrteil geformt wird aus Tetraflnorelhylen/Fluoralkylvinylether-Copolymer, das anfangs bei einer Temperatur von 280° C bei einer Laufgeschwindigkeit von 0,17 m/Min mit einer Ziehgeschwindigkeit von 1,0 m/Min um 600% verstreckt wird, wonach eine Temperbehandlung bei einer Temperatur von 220° C bei einer Laufgeschwindigkeit von 0,60 m/Min mit einer Ziehgeschwindigkeit von 0,50 mm/Min und eine Schrumpfbehandlung von 20% ausgeführt werden.

4. Verfahren zum Formen eines Fluorharz-Rohrteils nach Anspruch 1, wobei das Fluorharz-Rohrteil ein Tetrafluorethylen/Hexafluorpropyleb-Copolymer ist, das bei einer Laufgeschwindigkeit von
das bei einer Temperatur von 230° C bei einer Laufgeschwindigkeit von 0,20 m/Min mit einer Ziehgeschwindigkeit von 1,0 m/Min um 500% verstreckt wird, wonach eine Temperbehandlung bei einer Temperatur von 180° C bei einer Laufgeschwindigkeit von 0,60 m/Min mit einer Ziehgeschwindigkeit von 0,50 mm/Min und eine Schrumpfbehandlung von 20% ausgeführt werden.

5. Verfahren zum Formen eines Fluorharz-Rohrteils nach Anspruch 1, wobei das Fluorharz-Rohrteil ein Tetrafluorethylen/Fluoralkylvinylether-Copolymer ist, das bei einer Temperatur von 280° C bei einer Laufgeschwindigkeit von 0,15 m/Min mit einer Ziehgeschwindigkeit von 0,9 m/Min um 600% verstreckt wird, wonach eine Temperbehandlung bei einer Temperatur von 200° C bei einer Laufgeschwindigkeit von 0,60 m/Min mit einer Ziehgeschwindigkeit von 0,50 mm/Min und eine Schrumpfbehandlung von 20% ausgeführt werden,

6. Fluorharz-Rohrteils, das nach einem der Ansprüche 3 bis 5 erhalten werden kann.

7. Fluorharz-Rohrteil nach Anspruch 6, wobei das Fluorharz in dem Fluorhatz-Rohrteil mindestens eine Vergussmasse ist, die ausgewählt ist aus den Folgenden: Polytctratluorcthylen, Tetrafluorethylen/Hexafluorpropylen-Copolymer (FEP), Tetrafluorethylen/Fluoralkylvinylether-Copolymer (PFA), Ethylen/Tetrafluorethylen (ETFE), Polyvinylfluorid (PVFD), Polychlorfluorethylen (PCTFE) und ternäres Tetrafluorethylen/Hexafluorpropylen/Vinylidenfluorid-Copolymer (THV).

8. Fluorharz-Rohrteil nach einem der Ansprüche 6 oder 7, wobei das Fluorharz in dem Fluorharz-Rohrteil ein thermoplastisches Harz aufweist.

9. Verwendung eines Fluorharz-Rohrteils nach einem der Ansprüche 6 oder 8 in der Zuführung von Flüssigkeiten in Prozessen der Halbleiterfertigung.

## Revendications

1. Procédé pour la formation d'un élément tubulaire de résine fluorée comprenant les étapes suivantes:
a) étirage axial d'un corps tubulaire de résine fluorée dans un état chauffé à une température qui est à la température de moulage ou en dessous; et
b) recuit et thermodurcissement du corps tubulaire de résine fluorée étiré axialement à une température qui est à la température de moulage ou en dessous,
dans lequel la perméabilité à un gaz du corps tubulaire de résine fluorée est réduite de cette manière.

2. Procédé pour la formation d'un élément tubulaire de résine fluorée suivant la revendication 1, dans lequel l'élément tubulaire de résine fluorée est étiré axialement à une longueur qui est de deux à dix fois la longueur de l'élément tubulaire de résine fluorée préalablement à l'étirement.

3. Procédé pour la formation d'un élément tubulaire de résine fluorée suivant la revendication 1, dans lequel l'élément tubulaire de résine fluorée est formé à partir d'un copolymère de tétrafluoroéthylène-fluoroalkylvinyléther qui est initialement étiré à 600% à une température de 280°C à une vitesse de déplacement de 0,17 m/min avec une vitesse de traction de 1,0 m/min, après quoi un traitement de recuit a été effectué à une température de 220°C à une vitesse de déplacement de 0,60 m/min avec une vitesse de traction de 0,50 mm/min et un traitement de retrait de 20% a été effectué.

4. Procédé pour la formation d'un élément tubulaire de résine fluorée suivant la revendication 1, dans lequel l'élément tubulaire de résine fluorée est un copolymère de tétrafluoroéthylène-hexafluoropropylène qui est étiré à 500% à une température de 230°C à une vitesse de déplacement de 0,20 m/min avec une vitesse de traction de 1,0 m/min, après quoi un traitement de recuit a été effectué à une température de 180°C à une vitesse de déplacement de 0,60 m/min et une vitesse de traction de 0,50 mm/min et un traitement de retrait de 20% a été effectué.

5. Procédé pour la formation d'un élément tubulaire de résine fluorée suivant la revendication 1, dans lequel l'élément tubulaire de résine fluorée est un copolymère de tétrafluoroéthylène-fluoroalkylvinyléther qui est étiré à 600% à une température de 280°C à une vitesse de déplacement de 0,15 m/min avec une vitesse de traction de 0,9 m/min, après quoi un traitement de recuit a été effectué à une température de 200°C à une vitesse de déplacement de 0,60 m/min avec une vitesse de traction de 0,50 mm/min et un traitement de retrait de 20% a été effectué.

6. Elément tubulaire de résine fluorée pouvant être obtenu suivant l'une quelconque des revendications 3 à 5.

7. Elément tubulaire de résine fluorée suivant la revendication 6, où la résine fluorée dans l'élément tubulaire de résine fluorée est au moins un composé choisi parmi ce qui suit: polytétrafluoroéthylène (PTFE); copolymère de tétrafluoroéthylène-hexafluoropropylène (FEP); copolymère de tétrafluoroéthylène-fluoroalkylvinyléther (PFA); copolymère d'éthylène-tétrafluoroéthyléne (ETFE); polyvinylidène fluorure (PVDF); polychlorofluoroéthylène (PCTFE); et copolymère ternaire de tétrafluoroéthylène-hexafluoropropylène-vinylidène fluorure (THV).

8. Elément tubulaire de résine fluorée suivant l'une quelconque des revendications 6 et 7, où la résine fluorée dans l'élément tubulaire de résine fluorée comprend une résine thermoplastique.

9. Utilisation d'un élément tubulaire de résine fluorée suivant l'une quelconque des revendications 6 à 8, dans l'approvisionnement de liquides dans des procédés de fabrication de semi-conducteurs.
